# EUROPEAN PATENT APPLICATION

(11) **EP 2 518 804 A1**
(43) Date of publication of application: **31.10.2012**
(21) Application number: 12165799.3
(22) Date of filing: 26.04.2012
(51) Int. Cl.: H01M 4/525, H01M 4/505, B82Y 30/00, C01G 53/00, H01M 4/02, H01M 10/052

(54) **Positive electrode active material for non-aqueous electrolyte secondary battery**

(30) Priority: 28.04.2011 JP 2011100493; 03.04.2012 JP 2012084770
(71) Applicant: Nichia Corporation, Anan-shi, Tokushima 774-8601 (JP)
(72) Inventor: Kawai, Kenta, Anan-shi Tokushima 774-8601 (JP)
(74) Representative: Vossius & Partner

(57) **Abstract**

A positive electrode active material for non-aqueous electrolyte secondary battery, comprising particles of a lithium transition metal complex oxide represented by the general formula:

LiₐNi_{1-x-y-z}CoₓMn_{y}M'_{z}M"_{w}O₂

wherein 1.00 ≤ a ≤ 1.25, 0 ≤ x ≤ 0.5, 0 ≤ y ≤ 0.5, 0.002 ≤ ≤ 0.01, 0 ≤ w ≤ 0.05, M' is at least one kind of an element selected from W, Mo, Nb and Ta, and M" is at least one kind of an element selected from Zr, Al, Mg, Ti, B and V, and a complex oxide of lithium, and M' exists in the region ranging from an outermost surface of positive electrode active material particles to a depth of about 1 nm in the direction of center.

## Description

### BACKGROUND OF THE INVENTION

### Field of the Invention

The present invention relates to a positive electrode active material used in non-aqueous electrolyte secondary batteries, such as a lithium ion secondary battery. More particularly, the present invention relates to a positive electrode active material composition having improved output characteristics, storage characteristics and cycle characteristics. This application claims priority to Japanese Patent Application No. 2011-100493, filed on April 28, 2011 and Japanese Patent Application No. 2012-084770, filed on April 3, 2012, the contents of which are incorporated herewith by reference in their entirety.

### Description of the Related Art

With the spread of portable devices such as VTRs, cellular phones, and notebook-size personal computers and the progress of increasing functionality and miniaturization thereof, as well as the devices' use at high temperatures and low temperatures, a non-aqueous electrolyte secondary battery used for the power supply has recently been used. Furthermore, the non-aqueous electrolyte secondary battery has attracted a great deal of attention as a power battery for electric vehicles and the like so as to cope with environmental problems. There has been preferred, as a battery for an electric vehicle, a high output battery capable of performing sudden starts and quick acceleration, and a battery having excellent durability which is less likely to cause a decrease in capacity even if charge and discharge are repeated.

There has widely been employed, as a positive electrode active material for a lithium secondary battery, materials containing LiCoO₂ (Lithium cobalt oxide). This material has been capable of usage in a 4 V class secondary battery. In the case of using LiCoO₂ as the positive electrode active material, the discharge capacity is set to about 160 mAh/g for practical use.

Cobalt is used as a raw material component or LiCoO₂. However, cobalt is a scarce resource and is unevenly distributed, so cobalt can cost too much and causes anxiety about supply of the raw material.

In light of these circumstances, LiNiO₂ (lithium nickel oxide) has also been studied as an alternative material. LiNiO₂ can be capable of usage in a 4 V class secondary battery with the discharge capacity of about 200 mAh/g. However, there is difficulty with the stability of a crystal structure of a positive electrode active material incorporating LiNiO₂ during charge and discharge.

Thus, there has also been made a study in which the discharge capacity at the same level as that of LiCoO₂ is realized at low costs by substituting some of the nickel atoms of LiNiO₂ with other elements, while trying to improve stability of the crystal structure. For example, it is considered that LiNi_{0.33}Co_{0.33}Mn_{0.33}O₂ is more advantageous than LiCoO₂ from the viewpoint of costs.

On the other hand, with the enlargement of the application field of non-aqueous electrolyte secondary batteries, requirements have become more intense and thus an attempt has been made on further improvement. For example, WO 02/041419 discloses technology in which a diffraction peak attributed to a complex oxide of lithium and tungsten (Li₂WO₄) is allowed to appear by introducing tungsten into the composition so as to improve safety in case of charging with high capacity.

JP 4613943 discloses technology in which the concentration of tungsten on a surface of primary particles is adjusted by adding a specific amount of tungsten oxide as a sintering inhibitor to a mixed raw material slurry, spray-drying the slurry and then calcining the slurry so as to improve safety, load characteristics and voltage endurance.

By the way, recent requirements for the expanded usage of non-aqueous electrolyte secondary batteries also include prolongation of life of the battery. Plural factors for determination of life of the battery exist, and one of them is a decrease in charge-discharge capacity during storage for long periods. The technologies disclosed in WO 02/041419 and JP 4613943 are still insufficient in this respect, and a further improvement has been required. Also, output characteristics were still insufficient for an electric vehicle.

In case of using a lithium salt of fluorooxo acid, such as lithium hexafluorophosphate (LiPF₆) for an electrolyte, hydrofluoric acid is generated during charge and discharge and this hydrofluoric acid causes a transition metal element of a positive electrode active material to be eluted in an electrolyte solution. Therefore, the capacity of the battery decreases as charge and discharge are repeated. Decrease of life resulting from a decrease in capacity due to charge and discharge (also referred to as cycle characteristics) is still insufficient, particularly in automobile applications, and a further improvement has been desired.

### SUMMARY OF TEE INVENTION

Under these circumstances, the present invention has been made. An object of the present invention is to provide a positive electrode active material having improved storage characteristics, output characteristics and cycle characteristics as compared with the prior art.

The present inventors have intensively studied so as to improve the above-mentioned characteristics, and thus the present invention has been completed. The present inventors have found that the above characteristics can be improved by introducing a grain growth inhibiting element such as tungsten into a positive electrode active material with specific composition, thereby allowing the grain growth inhibiting element to exist in the vicinity of a surface of positive electrode active material particles in a specific state.

A positive electrode active material for non-aqueous electrolyte secondary battery of the present invention comprises particles of a lithium transition metal complex oxide represented by the general formula:

LiₐNi_{1-x-y-z}CoₓMn_{y}M' ₂M"_{w}O₂

wherein 1.00 ≤ a ≤ 1.25, 0 ≤ x ≤ 0.5, 0 ≤ y ≤ 0.5, 0.002 ≤ z ≤ 0.01, 0 ≤ w ≤ 0.05, M' is at least one kind of an element selected from W, Mo, Nb and Ta, and M" is at least one kind of an element selected from Zr, Al, Mg, Ti, B and V, and a complex oxide of lithium and M' exists in the vicinity of a surface of the particles, wherein an existence ratio "ns" of a nickel element to the entire transition metal elements on a surface of the particles, and an existence ratio "nb" of a nickel element to the entire transition metal elements inside the particles satisfy the following relation: 0.9 ≤ ns/nb ≤ 1.3.

The complex oxide of lithium and M' is preferably represented by the general formula:

LiₘM' O_{(m+v)/2}

wherein 2 ≤ m ≤ 6, and v is an oxidation number of M'.

An existence ratio "ms" of a manganese element to the entire transition metal elements on a surface of the particles, and an existence ratio "mb" of a manganese element to the entire transition metal elements inside the particles preferably satisfy the following relation: 0.7 ≤ ms/mb ≤ 1.3.

The particles are preferably secondary particles.

A tap density of the particles is preferably 1.3 g/cm³ or more.

A method for producing the positive electrode active material of the present invention is characterized in that spray drying of mixed raw material obtained by mixing raw materials of elements constituting the target composition of lithium transition metal complex oxide is not performed.

A non-aqueous electrolyte secondary battery of the present invention includes a positive electrode, a negative electrode and a non-aqueous electrolyte solution, wherein the positive electrode contains the positive electrode active material of the present invention, and an electrolyte in the non-aqueous electrolyte solution is a lithium salt of fluorooxo acid.

The lithium salt of the fluorooxo acid is preferably lithium hexafluorophosphate.

The positive electrode active material of the present invention has improvements of the above-mentioned characteristics, and thus it is possible to provide a non-aqueous electrolyte secondary battery which has improved output characteristics and cycle characteristics, and is also less likely to cause a decrease in charge-discharge capacity even if stored for long periods. The non-aqueous electrolyte secondary battery of the present invention can more sufficiently be used in an electric vehicle.

### BRIEF DESCRIPTION OF THE DRAWINGS

Fig. 1 explains "surface" and "inside" of particles in the present specification.
Fig. 2 explains "surface" and "inside" of secondary particles in the present specification.
Fig. 3 illustrates a relation among the depth x from a surface of positive-electrode active material particles, the mass Wm of the entire transition metal elements obtained from a surface analysis step of an analytical method in the present specification, and the mass W' m of transition metal elements in a specific region.
Fig. 4 shows the results of the measurement of a change in transition metal element distribution in a depth direction of a positive electrode active material of Example 1 using an analytical method of Example 3.
Fig. 5 shows the results of the measurement of a change in transition metal element distribution in a depth direction of a positive electrode active material of Comparative Example 1 using an analytical method of Example 3.
Fig. 6 shows the results of the measurement of a change in transition metal element distribution in a depth direction of a positive electrode active material of Comparative Example 2 using an analytical method of Example 3.
Fig. 7 shows the results of the measurement of a change in transition metal element distribution in a depth direction of a positive electrode active material of Comparative Example 3 using an analytical method of Example 3.
Fig. 8 shows how a difference in a buffer solution exerts an influence on a dissolution rate in a depth direction of positive electrode active material particles.
Further, here is a description of the Reference Numerals in these drawings:
1: Positive electrode active material particle
11: Particle inside
12: Particle surface
2: Positive electrode active material particle (Secondary particle)
21: Primary particle constituting secondary particle
22: Grain boundary between primary particles
23: Particle surface in secondary particle

### DETAILED DESCRIPTION OF THE INVENTION

The positive electrode active material of the present invention will be described in more detail below by way of the Embodiments and Examples. However, the present invention is not just limited only to these illustrative and exemplary Embodiments and Examples.

The positive electrode active material of the present invention has the composition of LiₐNi_{1-x-y-z}CoₓMn_{y}M'_{z}M"_{w}O₂ wherein 1.00 ≤ a ≤ 1.25, 0 ≤ x ≤ 0.5, 0 ≤ y ≤ 0.5, 0.002 ≤ z ≤ 0.01, 0 ≤ w ≤ 0.05, M' is at least one kind selected from grain growth inhibiting elements, and M" is at least one kind of an element selected from Zr, Al, Mg, Ti, B and V. This composition is an average composition of the entire positive electrode active material particles. A complex oxide of lithium and M' exists in the vicinity of a surface (mentioned below) of the positive electrode active material particles. When "a" is less than 1.00, the capacity may decrease. In contrast, when "a" is more than 1.25, it may become difficult to produce the positive electrode active material, because particles are sintered in the calcination step. "a" preferably satisfies the relation: 1.0 ≤ a ≤ 1.20, and more preferably the relation: 1.02 ≤ a ≤ 1.15. It is not preferred that x is more than 0.5, because costs can increase. "x" preferably satisfies the relation: 0.1 ≤ x ≤ 0.4, and more preferably the relation: 0.10 ≤ x ≤ 0.35. It is not preferred that y is more than 0.5, because the capacity decreases. "y" preferably satisfies the relation: 0.1 ≤ y ≤ 0.4, and more preferably the relation: 0.1 ≤ y ≤ 0.35. It is not preferred that z is less than 0.002, because the below-mentioned effect of adjusting distribution of transition metal element is not exerted. It is not preferred that z is more than 0.01 from the viewpoint of costs. When z is 0.01 or less, it is possible to improve cycle characteristics and high temperature storage characteristics of the battery. "z" preferably satisfies the relation: 0.0025 ≤ z < 0.01. At this time, a complex oxide of lithium and M' formed in the vicinity of a surface (mentioned below) of particles becomes a form which is more advantageous for cycle characteristics, as mentioned below. "z" more preferably satisfies the relation: 0.003 ≤ z ≤ 0.008.

M' is at least one kind selected from grain growth inhibiting elements. In the present specification, the "grain growth inhibiting element" means an element capable of inhibiting grain growth of lithium transition metal complex oxide particles during calcination. At least a portion of the grain growth inhibiting element exists in the vicinity of a surface (mentioned below) of particles in the form of a complex oxide with lithium. The grain growth inhibiting element does not exert an effect in the form of a simple substance, or a simple compound such as oxide. However, the effect is obtained by existing in the form of a complex oxide of lithium and a grain growth inhibiting element. At least one kind selected from W, Mo, Nb and Ta is preferable as the grain growth inhibiting element, and at least one kind of W and Nb is more preferable. It is particularly preferable to contain W.

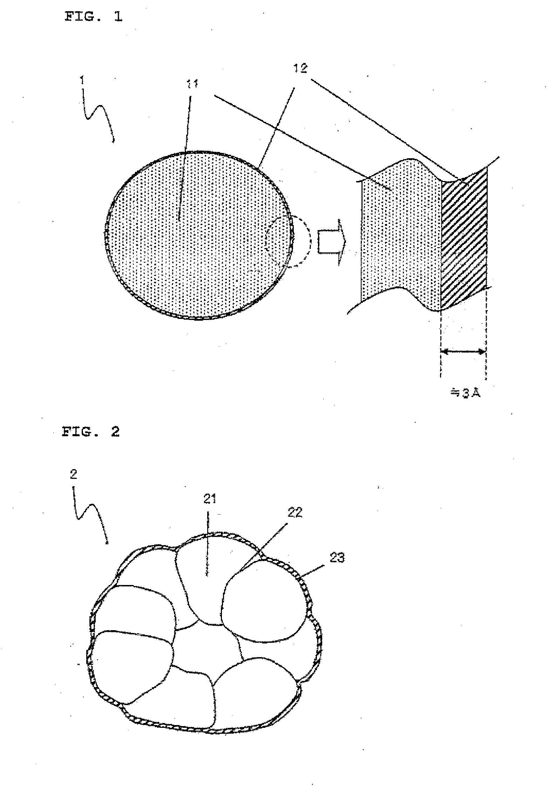

The M' can substitute a portion of Ni, Co and Mn in a crystal structure of a positive electrode active material to exist at the position where these elements should exist (hereinafter, the region where a crystal structure exists is also referred to as "inside of particles" of the positive electrode active material). At the same time, it exists in a state of a complex oxide of lithium and M' on a surface of the positive electrode active material particles. In the present specification, the region, where a regular crystal structure cannot be retained due to its geometric restriction in positive electrode active material particles, is referred to "particle surface". As a rough indication, the region ranging from an outermost surface of positive electrode active material particles to a depth of about 0.3 nm in the direction of center is regarded as the "particle surface" (see Fig. 1). The region ranging from an outermost surface of positive electrode active material particles to a depth of about 1 nm in the direction of center is regarded as the "vicinity of a surface of particles". In case particles of the interest are secondary particles, the region of the outermost portion of secondary particles among "particle surface" is referred to as a "surface of secondary particles", and other region is regarded as "inside of secondary particles". In Fig. 2, among primary particles 21 constituting secondary particles, a grain boundary 22 between primary particles is "inside of secondary particles," even if it is a "surface of primary particles", and only the region 23 is a "surface of secondary particles". Particles are preferably secondary particles from the viewpoint of output characteristics.

Inside particles, a portion of Ni, Co and Mn may be further substituted with other elements. Examples of other elements that can be suited for use as substitute element include Zr, Al, Mg, Ti, B, V and the like, and these elements may be used in combination. These elements can be preferably suited for use according to various purposes if the substitution amount is less than about 5 ml% based on Ni, Co and Mn.

The complex oxide of lithium and M' preferably exists in the vicinity of a surface of particles in a state represented by the general formula: LiₘM' O_{(m+v)/2} wherein 2 ≤ m ≤ 6, and v is an oxidation number of M'. In case of this form, reactivity with hydrofluoric acid generated inside the battery by charge and discharge becomes higher, and thus cycle characteristics are more improved. More preferable range is as follows: 4 ≤ m ≤ 6, v = 6.

In the positive electrode active material of the present invention, a distribution state of nickel, cobalt and manganese also varies between the surface and inside of particles. Inside particles, an existence ratio of these transition metal elements becomes an existence ratio in conformity with the composition of the entire positive electrode active material. The present inventors have found that there is a tendency that a ratio of a manganese element is high and a ratio of a nickel element is low on a surface of particles, and also found that output characteristics, storage characteristics and cycle characteristics may deteriorate when a ratio of a manganese element on a surface of particle is too high. In case the ratio of a manganese element on a surface of particles is low, no obvious problem arises. However, it is preferred to appropriately adjust the ratio so that an adverse influence is not exerted as much on other characteristics as a result of a preferential decrease in the ratio.

Furthermore, the present inventors have found that output characteristics tend to be improved when a ratio of a nickel element on a surface of particles is high. "ns/nb" is low such as about 0.80 in a conventional multicomponent positive electrode active material, in which "ns" denotes an existence ratio (atomic ratio) of a nickel element to the entire transition metal elements on a surface of particles, and "nb" denotes an existence ratio (atomic ratio) of a nickel element to the entire transition metal elements inside particles. This value preferably satisfies the following relation: 0.90 ≤ ns/nb ≤ 1.30. When the value of ns/nb is within the above range, it is possible to improve output characteristics of the non-aqueous electrolyte secondary battery. A more preferable range is as follows: 0.95 ≤ ns/nb ≤ 1.20.

"ms/mb" is high such as about 1.5 in a conventional multicomponent positive electrode active material, in which "ms" denotes an existence ratio (atomic ratio) of a manganese element to the entire transition metal elements on a surface of particles, and "mb" denotes an existence ratio (atomic ratio) of a manganese element to the entire transition metal elements inside particles. This value preferably satisfies the following relation: 0.7 ≤ ms/mb ≤ 1.3. When the value of ms/mb is within the above range, it is possible to improve output characteristics, storage characteristics and cycle characteristics of the non-aqueous electrolyte secondary battery. More preferable range is as follows: 0.8 ≤ ms/mb ≤ 1.2. As a matter of course, in case a manganese element does not exist in the positive electrode active material, discussion of this value is unnecessary. It is possible to set the values of the above-mentioned ns/nb and ms/mb in this way by adjusting the value of z in the positive electrode active material composition within a range of 0.002 or more and 0.01 or less.

The specific mechanism of action of the present invention in the positive electrode active material is not clear, but the following reason is estimated:

In case of producing the-positive electrode active material of the present invention, a grain growth inhibiting element preferentially reacts with a portion of lithium constituting the lithium transition metal complex oxide to form a complex oxide. This complex oxide moves to the vicinity of a surface of lithium transition metal complex oxide particles, and thus suppressing grain growth of lithium transition metal complex oxide particles. A complex oxide of lithium and M', which exists in the vicinity of a surface of particles as a result, is considered to react with hydrofluoric acid derived from an electrolyte solution, and thus prevent the positive electrode active material from dissolving in the electrolyte solution, which leads to an improvement in cycle characteristics.

As mentioned below, it is sufficient that the grain growth inhibiting element finally exists in a state of a solid solution as a complex oxide with lithium in the vicinity of a surface of positive electrode active material particles to form an entirely integrated positive electrode active material, and it does not matter whether grain growth inhibition mechanism is present or not.

It is considered that the grain growth inhibiting element exerts a function of adjusting element distribution of cobalt, nickel, manganese and the like when moving to the vicinity of a surface of positive electrode active material particles to form a solid solution. It is considered that this exerts an influence on output characteristics.

The method for producing a positive electrode active material of the present invention will be described below.

The positive electrode active material of the present invention is obtained by mixing raw materials of elements constituting the target composition containing an element M' to obtain a mixed raw material, and calcining the obtained mixed raw material. Alternatively, a lithium transition metal complex oxide containing elements other than the element M' may be produced in advance, followed by mixing of a raw material of the element M' with the lithium transition metal complex oxide produced in advance and further a heat treatment of the mixture. Both methods may be used in combination as long as a complex oxide of lithium and M' exists on a surface of particles of a lithium transition metal complex oxide, and also the complex oxide exists in lithium transition metal complex oxide particles in a state of a solid solution to form an entirely integrated positive electrode active material, as a result.

The following description is made with respect to the case of obtaining a positive electrode active material of the present invention by mixing raw materials of elements constituting the target composition containing an element M' to obtain a mixed raw material, and calcining the obtained mixed raw material.

### [Preparation of Raw Materials]

The method for preparing a raw material may be selected from known techniques. In some cases, known techniques may be used in combination. For example, a simple substance, an oxide or a compound which is converted into an oxide at high temperature of elements constituting the target composition may be mixed by various mixers. Alternatively, a watersoluble compound of elements constituting the target composition may be dissolved in a solvent such as pure water, followed by precipitation using an acid, an alkali, a complexing agent or the like and further separation and filtration. Alternatively, a complex oxide may be produced in advance by further calcining. However, only a raw material compound of lithium is separately added, followed by mixing to obtain a final mixed raw material.

It is preferred that the raw material of the element M' has a small particle size. When a starting raw material is in the form of small particles, it is possible to allow a complex oxide of lithium and M' to exist in a'form of LiₘM' O_{(m+v)/2} wherein 2 ≤ m ≤ 6, and v is an oxidation number of M', on a surface of positive electrode active material particles. When the particle size is too small, attention must be paid because it becomes difficult to perform mixing. The particle size is preferably within a range of 0.1 µm or more and 1 µm or less in terms of an average particle size. More preferably, the particle size is within a range of 0.5 µm or more and 0.7 µm or less. In this case, it is possible to control ns/nb and ms/mb within a further preferable range. The average particle size means the value determined by an air permeability method such as a Fisher sub sieve sizer method.

In the case of preparing a raw material by precipitating from a solution, a precipitate of a compound of a specific element may be formed, followed by separate addition of other elements and further mixing.

### [Mixing]

The raw material compounds of elements other than lithium obtained above and a raw material compound of lithium are uniformly mixed (using, for example, an appropriate mixer) to obtain a final mixed raw material. It is possible to use, as the raw material compound of lithium, an oxide, a hydroxide, a carbonate, a nitrate, a sulfate and the like.

### [Calcination]

Next, the obtained mixed raw material is typically calcined. There is no particular limitation on the calcination atmosphere. When the calcination temperature is too high, sintering may excessively proceed to cause a disruption in a treatment after calcination. In contrast, when the calcination temperature is too low, poor sintering may occur. Thus, the temperature is appropriately set. Usually, it is possible to suitably calcine when the calcination temperature is from 700°C to 1,200°C. It is particularly preferred to calcine at a temperature of 800°C to 1,050°C. It is possible to suitably calcine when the calcination time is from 3 to 24 hours. Attention must be paid because too short a calcination time may cause poor sintering, while too long a calcination time may cause excessive sintering.

A part or entirety of the element M' moves to a surface of the positive electrode active material particles by calcination. At least a portion of the element M' moved to the surface forms a complex oxide, together with lithium.

### [Post-Treatment]

The obtained calcined product is ground, optionally subjected to wet treatments, a wet grinding treatment and an acid treatment, and a dry treatment, and then sieved to obtain a positive electrode active material with the target composition.

The following description is made with respect to the case of producing a lithium transition metal complex oxide in advance, followed by mixing of a raw material of the element M' with the lithium transition metal complex oxide produced in advance and further a heat treatment of the mixture.

### [Production of Lithium Transition Metal Complex Oxide]

A lithium transition metal complex oxide to be produced in advance may be produced by selecting known techniques,or using them in combination. At this time, an element M' may have been already contained in the obtained lithium transition metal complex oxide.

### [Heat Treatment]

The obtained lithium transition metal complex oxide and a raw material of an element M' are mixed and the mixture is subjected to a heat treatment. There is no particular limitation on the atmosphere of the heat treatment, and an oxidizing atmosphere, a reducing atmosphere, vacuum, an inert atmosphere and the like can be optionally selected. Taking ease of the step into consideration, the heat treatment is sufficiently carried out in atmospheric air. The temperature of the heat treatment is selected so that the element M' is solid-soluted in lithium transition metal complex oxide particles. It is sufficient that the temperature is about 500°C or higher. No problem arises in case of high temperature. The heat treatment is sufficiently carried out at a temperature of lower than about 1,200°C. It is not necessary to raise the temperature furthermore, because higher temperature can cause energy loss.

It is possible to use, as the raw material of the element M' used upon heat treatment, a simple substance, an oxide, a hydroxide, a carbonate, a sulfate, a halide, a nitrate of M' and the like. Alternatively, a complex oxide per se of lithium and M', which is allowed to desirably exist on a surface, may also be used. Alternatively, a complex compound containing lithium and M' (alloy, acid halide, halosulfate, etc.) may also be used. Among these, an oxide is preferable because it can be easier to handle.

When the tap density of a positive electrode active material of the present invention is too small, attention must be paid to coatability of the positive electrode slurry prepared using the positive electrode active material to an electrode plate, which may sometimes deteriorate. A preferable range of tap density is 1.3 g/cm³ or more. A more preferable range is 1.5 g/cm³ to 2.2 g/cm³, and within this range, it is easy to satisfy both of the coatability and other purposes. In the method for producing a positive electrode active material of the present invention, when spray drying of a mixed raw material is performed, the tap density of the obtained positive electrode active material may decrease. Therefore, in the method for producing a positive electrode active material of the present invention, it is more preferred that spray drying is not performed.

A buffer solution used when analyzing a positive electrode active material of the present invention will be described below.

The buffer solution contains a polyacid having 3 or more valences as a main component . Examples of preferably usable polyacids include citric acid, various phosphoric acids and the like. It is preferred to use them in combination and to adjust the pH within a range from 5 to 6 by a solvent and a conjugate base because the transition metal element once eluted is better prevented from precipitating again. The pH is more preferably within a range from 5.5 to 5.9. It is particularly preferable to use citric acid as a polyacid having a first dissociation constant of 1.8 to 4.8, because it is less likely to form a precipitate, together with a component in the buffer solution to be used.

Next, analytical methods for a positive electrode active material of the present invention will be described.

The above-mentioned buffer solution is used in the analytical method. The analytical method comprises a dissolution step, a surface analysis step, an entire analysis step, a density measurement step, a specific surface area measurement step, a depth calculation step and an analysis step. The respective steps will be described below.

### [Dissolution Step]

Using the above-mentioned buffer solution, each of positive electrode active material particles is dissolved from an outermost surface to a given depth. Regarding a ratio of a positive electrode active material to a buffer solution, the amount of the positive electrode active material is from about 0.2 to 0.3 g based on 10 ml of the buffer solution. When each of positive electrode active material particles has remarkably large specific surface area, the amount of the active material is decreased. When the ratio is within such a range, the pH does not reach the pH at which the eluted transition metal element is precipitated even if dissolved for a long time (about 1 hour). The dissolution is performed by charging the buffer solution and the positive electrode active material in a polypropylene container and then stirring for 0.5 to 8 minutes. It is possible to dissolve only by the depth corresponding to about 0.01% of a median particle size of each of positive electrode active material particles by stirring for about 8 minutes. Namely, it is possible to dissolve only by the depth of about 0.5 nm when the median particle size is 10 µm.

### [Surface Analysis Step]

After completion of the stirring, filtration is performed and chemical analysis of the filtrate is performed to examine a ratio of the element in the region of a given depth from a surface of each of positive electrode active material particles. A known analytical technique such as inductively coupled plasma spectroscopy (ICP) may be used as the technique of chemical analysis. The mass Wm of the eluted entire transition metal elements and the mass Wc of the eluted lithium complex oxide per se are determined in advance.

### [Entire Analysis Step]

The average composition of the entire positive electrode active material particles is determined in advance by performing chemical analysis of the entire positive electrode active material concurrently with the above-mentioned step.

### [Density Measurement Step]

The density ρ of the positive electrode active material particles is measured in advance concurrently with the above-mentioned steps. There is no particular limitation on the measuring technique, and a known technique such as an Archimedean method, a liquid phase substitution method or a gas phase substitution method may be appropriately used. In the measurement of powders such as positive electrode active material particles, a gas phase substitution method is preferable because it can be easier to handle.

### [Specific Surface Area Measurement Step]

The specific surface area Sm of positive electrode active material particles is measured in advance concurrently with the above-mentioned steps. There is no particular limitation on the measuring technique, and a known technique such as a BET method may be used.

### [Depth Calculation Step]

Using Wm, Wc, p and Sm determined in the above-mentioned respective steps, the depth x from a surface of the dissolved lithium transition metal complex oxide particles is calculated by the following procedure.

A ratio Rm of the eluted entire transition metal elements to the eluted lithium transition metal complex oxide is determined by the equation: Rm = Wm/Wc. Although a ratio between transition metal elements varies depending on the depth, the sum per se of the entire transition metal was regarded as nearly constant. For example, Rm = 56.90/95.89 nearly equal to 0.593 (Rm⁻¹ nearly equal to 1.68) in LiNi_{0.33}Co_{0.33}Mn_{0.33}O₂ (formula weight: 95.89).

The volume Vc of the eluted lithium transition metal complex oxide is determined by the equation: Vc = Wc/p.

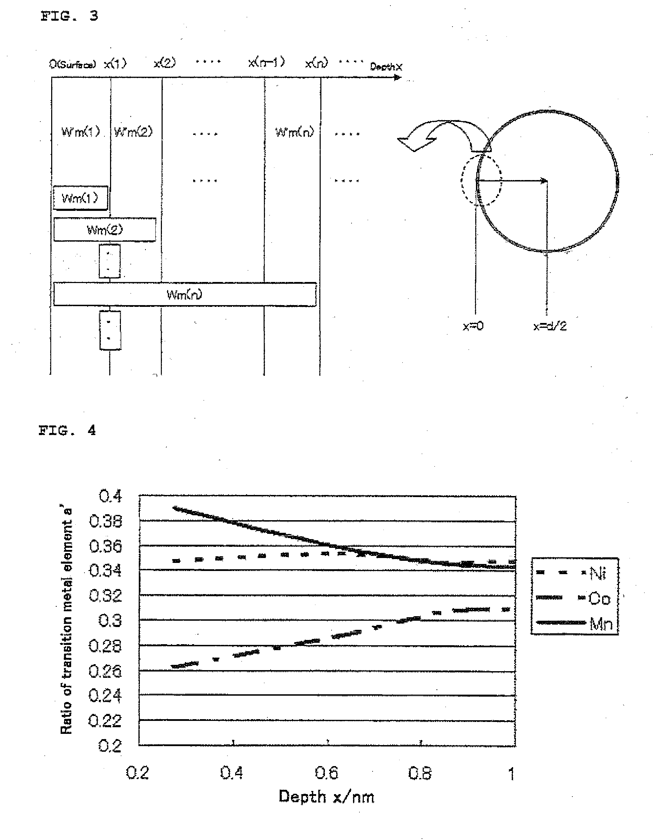

As shown in Fig. 3, when the depth x from a surface of the dissolved lithium transition metal complex oxide particles is sufficiently small as compared with the diameter d, approximation can be performed as follows: Vc = x·S where S denotes the surface area. The specific surface area Sm may be as follows: Sm = S/Vc because significant change is deemed to be absent before and after the dissolution step. Furthermore, a relation of the equation: S = n (3/Sm)² is established between the surface area (S) and the specific surface area (Sm). Therefore, a relation of the equation: x = Vc/S = (Mc/(ρ·π)) (Sm/3)² = (Wm/(Rm·ρ·π)) (Sm/3)² is derived from these relations, and thus the depth x from the surface is determined from Wm, Rm, ρ and Sm.

### [Analysis Step]

Next, the dissolution step and the surface analysis step are repeated. In the surface analysis step, the entire filtrate formed in the previous dissolution step is analyzed. As shown in Fig. 3, relations of the following equations: W'm (1) = Wm (1), and W'm (n) = {Wm (n) · x (n) - W'm (n-1) · x (n-1)}/{x (n) - x (n-1)} (n ≥ 2) are established, in which "Wm (n)" denotes the mass Wm of the entire transition metal element to be measured or calculated after the nth dissolution step, "x (n)" denotes the depth x from the surface to be measured or calculated after the nth dissolution step, and "W'm (n)" denotes the mass of the entire transition metal element in the region from the depth x (n-1) to the depth x (n). Based on this relational equation, W'm (n) and x (n) are calculated with respect to each n.

Also, relations of the following equations: a' (1) = a (1), and a' (n) = {Wm (n)·a (n) - Wm (n-1)·a (n-1)}/W'm (n) (n ≥ 2) are established, in which "a (n)" denotes a ratio of a certain specific transition metal element to the entire transition metal element eluted in the nth elute step, and "a' (n)" denotes a ratio of a certain specific transition metal element in the region from the depth x (n-1) to the depth x (n). Based on this relational equation, a' (n) is calculated with respect to each n. When the depth x is plotted along the abscissas, the ratio a' of the specific transition metal element is plotted along the ordinate, and (x, a' = (x (n), a' (n)) is plotted with respect to each transition metal element, it is found how element distribution varies from a surface in a depth direction.

### [Example 1]

In a reaction vessel, pure water in a stirring state is prepared and then an aqueous nickel sulfate solution, an aqueous cobalt sulfate solution and an aqueous manganese sulfate solution are added dropwise in a flow ratio that achieves Ni:Co:Mn of 1:1:1 in terms of a molar ratio. After completion of the dropwise addition, a solution temperature is controlled to 65°C and a given amount of an aqueous sodium hydroxide solution is added dropwise to obtain a nickel-cobalt-manganese co-precipitated hydroxide. The obtained co-precipitated hydroxide is washed with water, filtrated, separated and then thermally decomposed in air at 320°C to obtain a nickel-cobalt-manganese complex oxide. The obtained complex oxide, lithium carbonate and tungsten (VI) oxide having an average particle size of 0.5 µm are mixed so that Li:(Ni + Co + Mn):W becomes 1.15:1:0.005 to obtain a mixed raw material. The obtained mixed raw material is calcined under an air atmosphere at 960°C for 15 hours to obtain a sintered body. The obtained sintered body is ground and then dry-sieved to obtain a positive electrode active material represented by the composition formula:

Li_{1.15}Ni_{0.333}CO_{0.333}Mn_{0.333}W_{0.005}O₂.

### [Examples 2]

In the same manner as in Example 1, a nickel-cobalt-manganese complex oxide is obtained. The obtained complex oxide, lithium carbonate and tungsten(VI) oxide are mixed so that Li:(Ni + Co + Mn):W becomes 1.15:1:0.008 to obtain a mixed raw material. The obtained mixed raw material is calcined under an air atmosphere at 990°C for 15 hours to obtain a sintered body. The obtained sintered body is ground and then dry-sieved to obtain a positive electrode active material represented by the composition formula: Li_{1.15}Ni_{0.333}CO_{0.333}Mn_{0.333}W_{0.008}O₂.

### [Comparative Example 1]

In the same manner as in Example 1, a nickel-cobalt-manganese complex oxide is obtained. The obtained complex oxide and lithium carbonate are mixed so that Li: (Ni + Co + Mn) becomes 1.15:1 to obtain a mixed raw material. The obtained mixed raw material is calcined under an air atmosphere at 960°C for 15 hours to obtain a sintered body. The obtained sintered body is ground and then dry-sieved to obtain a positive electrode active material represented by the composition formula: Li_{1.15}Ni_{0.333}Co_{0.333}Mn_{0.333}O₂.

### [Comparative Example 2]

In the same manner as in Example 1, a nickel-cobalt-manganese complex oxide is obtained. The obtained complex oxide, lithium carbonate and tungsten(VI) oxide are mixed so that Li: (Ni + Co + Mn):W becomes 1.15:1:0.015 to obtain a mixed raw material. The obtained, mixed raw material is calcined under an air atmosphere at 990°C for 15 hours to obtain a sintered body. The obtained sintered body is ground and then dry-sieved to obtain a positive electrode active material represented by the composition formula: Li_{1.15}Ni_{0.333}Co_{0.333}Mn_{0.333}W_{0.015}O₂.

### [Comparative Example 3]

In the same manner as in Example 1, a nickel-cobalt-manganese complex oxide is obtained. The obtained complex oxide, lithium carbonate and tungsten (VI) oxide are mixed so that Li:(Ni + Co + Mn):W becomes 1.15:1:0.020 to obtain a mixed raw material. The obtained mixed raw material is calcined under an air atmosphere at 990°C for 15 hours to obtain a sintered body. The obtained sintered body is ground and then dry-sieved to obtain a positive electrode active material represented by the composition formula: Li_{1.15}Ni_{0.333}Co_{0.333}Mn_{0.333}W_{0.020}O₂.

### [Element Distribution Analysis of Particles in Depth Direction]

The positive electrode active material is analyzed below using specifically an analytical method of the present invention.

### [Example 3]

With respect to the positive electrode active material of Example 1, a change in element distribution of positive electrode active material particles in a depth direction is analyzed by the following procedure.

After weighing 8 g of trisodium citrate (anhydrous) and 0.95 g of citric acid (anhydrous), the total amount of them is transferred to a 500 ml measuring flask. Pure water is charged in the measuring flask and the final amount of the liquid is adjusted to 500 ml. A citrate-based buffer solution with pH 5.8 is thus obtained.

The positive electrode active material (0.2 g) and the mixed buffer solution (10 ml) are charged in a 100 ml polypropylene container and then stirred for a predetermined time by rotating a stirrer.

After completion of the stirring, contents in the polypropylene container are removed and filtered. The filtrate (1 ml) of the entire filtrate is used for inductively coupled plasma spectroscopy. The remaining filtrate and solid component are returned into the polypropylene container and is stirred again. Every stirring time of 0.5 minute, 1 minute, 2 minutes, 4 minutes, 6 minutes and 8 minutes, a polypropylene container is prepared, and the positive electrode active material and the mixed buffer solution are charged and then stirred by rotating a stirrer. When reaching the predetermined stirring time, filtration and analysis are carried out in the same manner.

After completion of the final surface analysis step, the depth of positive electrode active material particles dissolved in each dissolution step is determined, together with the values of the density and the specific surface area measured separately, and distribution of a transition metal element at the depth is plotted. Also, ns/nb and ms/mb are calculated based thereon. Average values of W'm of nickel and manganese up to the depth of 0.3 nm were used as ns and ms, respectively. Representative values in a region where a' is stabilised (about 1.2 to 1.5 nm) were used as nb and mb, respectively.

### [Example 4]

In the same manner as in Example 3, except that the positive electrode active material of Example 2 is used, a change in element distribution of positive electrode active material particles in a depth direction is analyzed.

### [Reference Example 1]

In the same manner as in Example 3, except that the positive electrode active material of Comparative Example 1 is used, a change in element distribution of positive electrode active material particles in a depth direction is analyzed.

### [Reference Example 2]

In the same manner as in Example 3, except that the positive electrode active material of Comparative Example 2 is used, a change in element distribution of positive electrode active material particles in a depth direction is analyzed. Also, ns/nb and ms/mb are calculated based thereon. Average values of W'm of nickel and manganese up to the depth of about 0.4 nm were used as ns and ms, respectively. Representative values in a region where a' is stabilized (about 2 nm) were used as nb and mb, respectively.

### [Reference Example 3]

In the same manner as in Example 3, except that the positive electrode active material of Comparative Example 3 is used, a change in element distribution of positive electrode active material particles in a depth direction is analyzed. Also, ns/nb and ms/mb are calculated based thereon. Average values of W'm of nickel and manganese up to the depth of about 0.5 nm were used as ns and ms, respectively. Representative values in a region where a' is stabilized (about 2 nm) were used as nb and mb, respectively.

### [Comparison of Solutions]

A buffer solution for comparison with the above citrate-based buffer solution to be used for analysis of the positive electrode active material of the present invention is prepared.

### [Comparative Example 4]

After weighing 24.3 ml of an aqueous 0.1 mol/L citric acid solution and 25.7 ml of an aqueous 0.2 mol/L disodium hydrogen phosphate solution and mixing them, the total amount of the mixture is transferred to a 100 ml measuring flask. Pure water is charged in the measuring flask and the final amount of the liquid is adjusted to 100 ml. A citrate-phosphate-based buffer solution with pH 5.0 is thus obtained.

### [Comparative Example 5]

After weighing 92.0 ml of an aqueous 0.2 mol/L sodium dihydrogen phosphate solution and 8 ml of an aqueous 0.2 mol/L disodium hydrogen phosphate solution and mixing them, the total amount of the mixture is transferred to a 200 ml measuring flask, Pure water is charged in the measuring flask and the final amount of the liquid is adjusted to 200 ml. A phosphate-based buffer solution with pH 5.8 is thus obtained.

### [Reference Examples 4 and 5]

In the same manner as in Example 3, except that the buffer solutions of Comparative Examples 4 and 5 are used, element distribution in a depth direction is analyzed with respect to the positive electrode active material of Example 1. Also, ns/nb and ms/mb are calculated based thereon. An average value of W'm of nickel and manganese up to the depth of 0.3 nm was used as ns and ms, respectively. A representative value in a region where a' is stabilized (about 1.2 to 1.5 nm) was used as nb and mb, respectively.

### [Evaluation of Entire Positive Electrode Active Material Particles]

With respect to the positive electrode active materials of Examples 1 and 2 as well as Comparative Examples 1 to 3, an average composition of a positive electrode active material is measured by inductively coupled plasma spectroscopy (IPC).

### [Evaluation of Vicinity of Surface of Positive Electrode Active Material Particles]

With respect to the positive electrode active material of Examples 1 and 2 as well as Comparative Examples 1 to 3, an existence form of an element M' in the vicinity of a surface of positive electrode active material particles is analyzed by Time-of-Flight Secondary Ion Mass Spectrometry (TOF-SIMS). The vicinity of a surface to be analyzed by TOF-SIMS is determined by observing a cross section of positive electrode active material particles in advance by SEM-EDX or the like.

### [Production of Secondary Battery for Evaluation]

Using the positive electrode active materials of Examples 1 and 2 as well as Comparative Examples 1 to 3, secondary batteries for evaluation are produced by the following procedure and are used for various evaluations.

A positive electrode composition (85 parts by weight), acetylene black (10 parts by weight) and polyvinylidene fluorite (PVDF) (5.0 parts by weight) are dispersed in normal-2-pyrrolidone (NMP) to prepare a positive electrode slurry. The obtained positive electrode slurry is applied to an aluminum foil and dried, and then the coated electrode is compression-formed by a roll press machine and cut into pieces with a predetermined size to obtain a positive electrode.

Lithium titanate (90 parts by weight), acetylene black (3 parts by weight), a vapor-grown carbon fiber (VGCF, registered trademark) (2.0 parts by weight) and 5.0 parts by weight of PVDF are dispersed in NMP to prepare negative electrode slurry. The obtained negative electrode slurry is applied to an aluminum foil and dried, and then the coated electrode is compression-formed by a roll press machine and cut into pieces with a predetermined size to obtain a negative electrode.

Ethylene carbonate (EC) and methylethyl carbonate (MEC) are mixed at a volume ratio of 3:7 to obtain a solvent. Lithium hexafluorophosphate (LiPF₆) are dissolved in the obtained mixed solvent so that the concentration becomes 1 mol/L to obtain a non-aqueous electrolyte solution.

A lead electrode is attached to each current collector of the positive and negative electrodes, followed by vacuum drying at 120°C. Then, a separator made of a porous polyethylene is arranged between the positive and negative electrodes, and they are accommodated in a bag-shaped laminate pack. After accommodation, moisture adsorbed to each member is removed by vacuum drying at 60 °C. After vacuum drying, the above-mentioned non-aqueous electrolyte solution is injected into the laminate pack, followed by sealing to obtain a laminate type non-aqueous electrolyte secondary battery for evaluation.

### [Evaluation of Storage Characteristics]

The charge capacity and discharge capacity are measured by the following procedure and a secondary battery for evaluation is subjected to constant current-constant voltage charge at a charge potential of 4.2 V and a charge load of 0.2 C (1C: current value required to complete discharge within 1 hour from a fully charged state). The charge capacity at this time is regarded as Q0.

The secondary battery for evaluation is disposed in constant temperature bath at 60°C and then stored for 5 days. After completion of the storage, constant current discharge is carried out at a discharge voltage of 2.75 V and a discharge load of 0.2 C, and then constant current-constant voltage charge is carried out at a charge potential of 4.2 V and a charge load of 0.2C. The charge capacity at this time is regarded as Q1 and Q1/Q0 is regarded as a high temperature storage capacity retention ratio Qk.

### [Evaluation of Output Characteristics]

A voltage and a current are measured by the following procedure to determined battery resistance. Low battery resistance means higher output characteristics.

At a measurement temperature of 25°C, constant voltage charge at 4.2 V up to a depth of charge of 50% is performed, and then pulse discharge is carried out. The time of pulse discharge is set to 10 seconds, and the interval of each pulse discharge is set to 3 minutes. With respect to the currents 0.04 A, 0.08 A, D.1.2 A, 0.16 A and 0.20 A during pulse discharge, a difference (potential difference) between a potential after charge and a potential during pulse discharge is divided by the current during pulse discharge to obtain battery resistance at the current during pulse discharge upon the measurement. The battery resistance at the current during each pulse discharge is averaged and the obtained average is evaluated as final battery resistance (DC-IR).

### [Production of Electrolyte Solution for Evaluation of Cycle Characteristics]

An electrolyte solution for evaluation is produced by the following procedure and is used for evaluation of cycle characteristics.

EC and MEC are mixed at a volume ratio of 3:7 to obtain a solvent. Lithium hexafluorophosphate is dissolved in the obtained mixed solvent so that the concentration becomes 1 mol/L to obtain a non-aqueous electrolyte solution. Ionexchange water is added to the obtained non-aqueous electrolyte solution thereby adjusting the concentration of free hydrofluoric acid to 800 ppm to obtain an electrolyte solution for evaluation.

### [Evaluation of Cycle Characteristics by Electrolyte Solution]

Using the positive electrode active materials of Examples 1 and 2 as well as Comparative Examples 1 to 3, a change in concentration of free hydrofluoric acid, and the amount of a transition metal element eluted in an electrolyte solution are determined by the following procedure.

The positive electrode active material (1 g) is placed in a laminate pack and then sufficiently dried in vacuum at 110°C. After drying, 15 g of an electrolyte solution for evaluation is poured into a laminate pack under an argon atmosphere at a dew point of -60°C or lower, followed by sealing. After sealing, the laminate pack is left to stand in a constant temperature bath at 80°C for 2 days.

After two days, the positive electrode active material and the electrolyte solution for evaluation are removed from the laminate pack and the both are separated. The concentration of free hydrofluoric acid in the separated electrolyte solution for evaluation is determined by a titration method. BPB (bromophenol blue) or the like is used as an indicator, and sodium hydroxide or the like is used as a titrant.

A portion of the separated electrolyte solution for evaluation is subjected to elemental analysis by ICP and the amount of a transition metal element eluted in an electrolyte solution is determined.

It can be considered that the lower the concentration of free hydrofluoric acid after being left to stand, and the lower the amount of the element of the positive electrode active material eluted in the electrolyte solution, more satisfactory cycle characteristics are.

### [Evaluation of Cycle Characteristics by Secondary Battery for Evaluation]

Using a secondary battery for evaluation, charge and discharge are carried out (200 cycles, 1 cycle including one charge and one discharge) at 25°C under the conditions of a charge potential of 4.2 V, a discharge potential of 2.75 V and a discharge load of 2 C. A ratio of a discharge capacity after 200 cycles to a discharge capacity after 1 cycle is regarded as a discharge capacity retention ratio Qs. Large value of Qs means satisfactory cycle characteristics.

Average composition of a positive electrode active material, form of a complex oxide of lithium and M' in the vicinity of a surface of positive electrode active material particles, ns/nb, ms/mb, and form of positive electrode active material particles of Examples 1 and 2 as well as Comparatives Example 1 to 3 are collectively shown in Table 1.

**[Table 1]**

| | Average composition | Complex oxide in the vicinity of surface | ns/sb | ms /mb |
|---|---|---|---|---|
| Example 1 | Li_{1.15}Ni_{0.333}Co_{0.333}Mn_{0.333}W_{0.005}O₂ | Li₄WO_{5,} Li₆WO₆ | 0.97 | 1.13 |
| Example 2 | Li_{1.15}Ni_{0.333}Co_{0.333}Mn_{0.333}W_{0.008}O₂ | Li₄WO_{5,} Li₆WO₆ | 0.97 | 1.12 |
| Comparative Example 1 | Li_{1.15}Ni_{0.333}Co_{0.333}Mn_{0.333}O₂ | - | 0.90 | 1.50 |
| Comparative Example 2 | Li_{1.15}Ni_{0.333}Co_{0.333}Mn_{0.333}W_{0.015}O₂ | Li₄WO₅, Li₆WO₆ | 0.89 | 1.11 |
| Comparative Example 3 | Li_{1.15}Ni_{0.333}Co_{0.333}Mn_{0.333}W_{0.020}O₂ | Li₄WO₅, Li₆WO₆ | 0.84 | 1.10 |

High temperature storage capacity retention ratio Qk, DC-IR at 25°C, change Δfs in concentration of free hydrofluoric acid after storage in electrolyte solution for evaluation, amount S (M) of transition metal element (M is each transition metal element) eluted in electrolyte solution for evaluation, and discharge capacity retention ratio Qs of Example 1 and 2 as well as Comparative Examples 1 to 3 are collectively shown in Table 2.

**[Table 2]**

| | Qk/% | DC-IR/Ω | Δfs/ppm | S (Ni) /ppm | 3 (Co) /ppm | S (Mn) /ppm | Qs/% |
|---|---|---|---|---|---|---|---|
| Example 1 | 92.4 | 1.42 | -850 | 50 | 50 | 64 | 90.1 |
| Example 2 | 89.1 | 1.39 | -920 | 49 | 49 | 63 | 91.0 |
| Comparative Example 1 | 84.2 | 1.51 | +230 | 79 | 48 | 75 | 85.6 |
| Comparative Example 2 | 88.8 | 1.32 | -940 | 95 | 45 | 60 | 85.8 |
| Comparative Example 3 | 88.4 | 1.32 | -950 | 45 | 44 | 59 | 84.4 |

As is apparent from Table 1 and Table 2, the positive electrode active material of the present invention exhibits high capacity retention ratio at high temperature, low battery resistance, and also causes a decrease in elution of a transition metal element in a positive electrode active material by hydrofluoric acid.
In case of using the positive electrode active materials of Examples 1 and 2, the high temperature storage capacity retention ratio Qk and discharge capacity retention ratio Qs exhibit higher values as compared with Comparative Example 1 in which W is not added, and Comparative Examples 2 and 3 in which z is more than 0.01. Therefore, it is found that storage characteristics and cycle characteristics are improved by adding W to the positive electrode active material. As is apparent from the results of Comparative Examples 2 and 3, storage characteristics and cycle characteristics deteriorate, on the contrary, when z is more than 0.01. This reason is considered that a portion of W reacted with hydrofluoric acid is reprecipitated on then negative electrode.- Therefore, it is considered that z is preferably 0.01 or less so as to improve high temperature storage characteristics and cycle characteristics of the non-aqueous electrolyte secondary battery.
In case of using the active materials of Examples 1 and 2, DC-IR exhibits a lower value as compared with Comparative Example 1 in which W is not added. Therefore, it is found that the addition of W to the positive electrode active material causes a decrease in battery resistance, resulting in improvement of output characteristics of the battery.
In Examples 1 and 2 as well as Comparative Examples 2 and 3, the concentration of hydrofluoric acid in the electrolyte solution decreases after the cycle, characteristics evaluation test. This reason is considered that a complex oxide of lithium and W exists in the vicinity of a surface of positive electrode active material particles and the complex oxide thereof reacts with hydrofluoric acid, and as a result, elution of the transition metal element in the positive electrode active material due to hydrofluoric acid decreased. On the other hand, in case of using the positive electrode active material of Comparative Example 1 in which W is not added, the concentration of hydrofluoric acid in the electrolyte solution does not decrease after the cycle characteristics evaluation test, and the transition metal element in the positive electrode active material is eluted in the electrolyte solution.
As mentioned above, it can be concluded that any of storage characteristics, output characteristics and cycle characteristics was improved by using the positive electrode active material of the present invention.

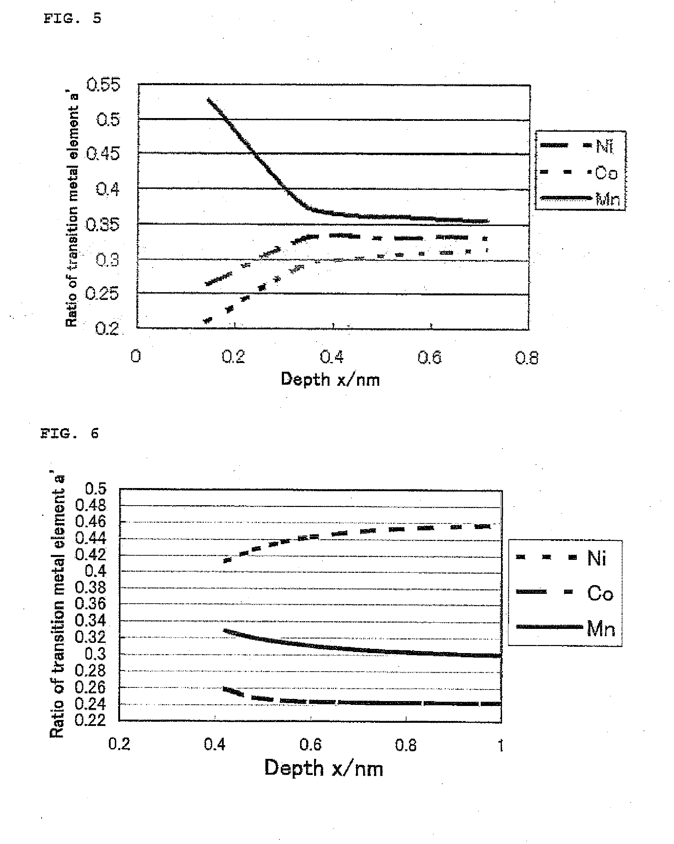

With respect to Example 3 and Reference Examples 1 to 3, a change in element distribution of positive electrode active material particles in a depth direction is shown in Figs. 4 to 7.

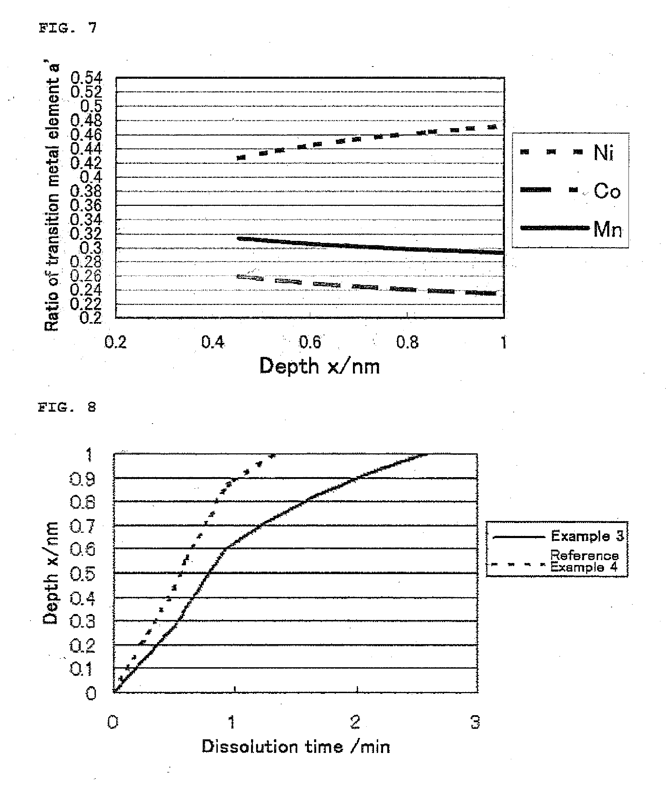

With respect to Example 3 and Reference Example 4, a relation between the stirring time and the elution depth x is shown in Fig. 8. In Reference Example 5, the measurement can not be performed because a transition metal element such as cobalt is not eluted.

As is apparent from Figs. 4 to 7 and Table 1, the presence or absence of W causes a difference in distribution of a transition metal element in the vicinity of a surface of positive electrode active material particles. This tendency is also the same in other grain growth inhibiting element.
In the positive electrode active material of Example 1, ns/nb is 0.9 or more and 1.3 or less, and ms/mb is 0.7 or more and 1.3 or less. To the contrary, in the positive electrode active material of Comparative Example 1, although ns/nb is 0.9, ms/mb is 1.50 and exhibits a larger value than 1.3. Therefore, it is found that the existence of W as the grain growth inhibiting element in the active material enables a decrease in a ratio of a manganese element on a surface of active material particles.
In the positive electrode active materials of Comparative Examples 2 and 3 in which z is more than 0.01, although ms/mb is 0.7 or more and 1.3 or less, ns/nb exhibits a smaller value than 0.9. Therefore, it is considered that z is preferably 0.01 or less so as to set a ratio of nickel on a surface of Lithium transition metal complex oxide particles within a range of 0.9 or more and 1.3 or less.

As is apparent from Fig. 8, it is possible to obtain information with respect to the distribution of a transition metal element with respect to positive electrode active material particles in a depth direction at a resolution of 0.1 nm order by the analytical method of Example 3. To the contrary, it is found it difficult to obtain information at resolution of 0.1 nm order by the method of Reference Example 4 because of possibly too high of a dissolution rate.

The TOF-SIMS measurement reveals that Li₄WO₅ and Li₆WO₆ exist in the vicinity of a surface of Lithium transition metal complex oxide particles in any of the positive electrode active materials of Examples 1 and 2 as well as Comparative Examples 2 and 3, as shown in Table 1.

### [Evaluation of Tap Density]

An evaluation is made by the following procedure with respect to the influence of the difference in the method for producing which is exerted on tap density of the obtained positive electrode active material in the positive electrode active material of the present invention.

### [Reference Example 6]

Firstly, a positive electrode active material of Reference Example 6 for the evaluation of tap density is prepared by the following procedure.
Lithium carbonate, nickel(II) hydroxide, trimanganese tetraoxide, cobalt hydroxide oxide and lithium tungstate Li₂WO₄) having an average particle size of 1.5 µm are weighed and mixed so that Li:Ni:Mn:Co:W becomes 1.10:0.33:0.33:0.33:0.005 in terms of a molar ratio, and then pure water is added to prepare a slurry. This slurry is placed in a ball mill and then wet-ground for 15 hours. The ground slurry is spray-dried using a three fluid nozzle spray dryer. The powder obtained by drying is placed in an alumina crucible and then calcined under an air atmosphere at 1,000°C for 6 hours to obtain a calcined product. The obtained calcined product is crushed to obtain a positive electrode active material represented by the composition formula: Li_{1.10}Ni_{0.31}Co_{0.36}Mn_{0.33}W_{0.005}O₂. Surface of particles of the obtained positive electrode active material of Reference Example 6 is analyzed by TOF-SIMS, and it is found that Li₂WO₄ exists in the vicinity of the surface of the particles.

With respect to the positive electrode active materials of Example 1 and Reference Example 6, tap density is measured. Tap density is determined by charging 20 g of the positive electrode active material particle in a measuring cylinder, performing tapping of the cylinder for 150 times, and then measuring the volume of the positive electrode active material after tapping.
The measured tap density of the positive electrode active material of Example 1 is 1.90 g/cm³ and exhibits higher value than 1.3 g/cm³. In contrast, the tap density of the positive electrode active material of Reference Example 6 produced by performing spray-drying is 0.94 g/cm³ and exhibits lower value than 1.3 g/cm³. Therefore, it is considered to be more preferable to produce the positive electrode active material without performing spray-drying in order to achieve the preferable tap density of 1.3 g/cm³ or more in the positive electrode active material of the present invention.

The positive electrode active material of the present invention can be suited for use in facilities on the assumption of being continuously installed for long periods, such as electric vehicles, industrial machineries, and power generation and transformation facilities. The positive electrode active material can be suited for use, particularly in large-sized fixed facilities such as standby power sources, and power generation and transformation facilities of buildings.

## Claims

1. A positive electrode active material for non-aqueous electrolyte secondary battery, comprising particles of a lithium transition metal complex oxide represented by the general formula:
LiₐNi_{1-x-y-z}CoₓMn_{y}M'_{z}M"_{w}O₂
wherein 1.00 ≤ a ≤ 1.25, 0 ≤ x ≤ 0.5, 0 ≤ y ≤ 0.5, 0.002 ≤ z ≤ 0.01, 0 ≤ w ≤ 0.05, M' is at least one kind of an element selected from W, Mo, Nb and Ta, and M" is at least one kind of an element selected from Zr, Al, Mg, Ti, B and V, and a complex oxide of lithium, and M' exists in the vicinity of a surface of the particles.

2. The positive electrode active material according to claim 1, wherein an existence ratio "ns" of a nickel element to the entire transition metal elements on a surface of the particles, and an existence ratio "nb" of a nickel element to the entire transition metal elements inside the particles satisfy the following relation: 0.9 ≤ ns/nb ≤ 1.3.

3. The positive electrode active material according to claim 1 or 2, wherein the complex oxide of lithium and M' is represented by the general formula:
LiₘM'O_{(m+v)/2}
wherein 2 ≤ m ≤ 6, and v is an oxidation number of M'.

4. The positive electrode active material according to claim 3, wherein 4 ≤ m ≤ 6, and v is 6.

5. The positive electrode active material according to claim 4, wherein the complex oxide of lithium and M' is chosen from the group comprising Li₄WO₅ and Li₆WO₆.

6. The positive electrode active material according to any one of claims 1 to 5, wherein the particles are secondary particles.

7. The positive electrode active material according to any one of claims 1 to 6, wherein an existence ratio "ms" of a manganese element to the entire transition metal elements on a surface of the particles, and an existence ratio "mb" of a manganese element to the entire transition metal elements inside the particles satisfy the following relation: 0.7 ≤ ms/mb ≤ 1.3.

8. The positive electrode active material according to any one of claims 1 to 7, wherein a tap density of the particles is 1.3 g/cm³ or more.

9. A method for producing the positive electrode active material according to any one of claims 1 to 8, **characterized in that** spray drying of mixed raw material obtained by mixing raw materials of elements constituting the target composition of lithium transition metal complex oxide is not performed.

10. A non-aqueous electrolyte secondary battery, comprising a positive electrode, a negative electrode and a non-aqueous electrolyte solution, wherein
the positive electrode contains the positive electrode active material according to any one of claims 1 to 8, and
an electrolyte in the non-aqueous electrolyte solution is a lithium salt of fluorooxo acid.

11. The non-aqueous electrolyte secondary battery according to claim 10, wherein the secondary battery is useful as a battery for an electric vehicle.

12. The non-aqueous electrolyte secondary battery according to claim 10 or 11, wherein the lithium salt of the fluorooxo acid is lithium hexafluorophosphate.
